(19) Europäisches Patentamt
European Patent Office
Office européen des brevets

(11) **EP 2 270 939 A2**

(12) **EUROPEAN PATENT APPLICATION**

(43) Date of publication:
**05.01.2011 Bulletin 2011/01**

(51) Int Cl.:
**H02B 13/045** *(2006.01)*

(21) Application number: **10167475.2**

(22) Date of filing: **28.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.06.2009 JP 2009155568**

(71) Applicant: **Kabushiki Kaisha Toshiba**
**Tokyo 105-8001 (JP)**

(72) Inventors:
• **Fukunaga, Masayuki**
**Tokyo 105-8001 (JP)**
• **Okanari, Nobuaki**
**Tokyo 105-8001 (JP)**
• **Komaki, Azumi**
**Tokyo 105-8001 (JP)**

(74) Representative: **HOFFMANN EITLE**
**Patent- und Rechtsanwälte**
**Arabellastraße 4**
**81925 München (DE)**

(54) **Gas insulated switching apparatus**

(57) A flexible tube (7) made of a metal bellows made of austenitic stainless steel with a high-flexibility coating applied thereto is employed as gas tubing sections (6a), (6b) connected with sealed containers (1a) to (3b). The flexible tube (7) is provided at both ends with freely rotatable flanges (7b). Using these flanges (7b), the gas tubing is connected with gas ports (8) of the sealed containers. The resistance of the stainless steel flexible tube is high in comparison with copper tubing, and the sheath current can thus be reduced. High-flexibility coating is applied to the outside of the flexible tube. Bending processing of the flexible tube is possible even after coating and weatherability is thereby improved. The support interval of the gas tubing is at least 1 m. Resonance of the gas tubing caused by the frequency of the mains power system thus cannot occur.

FIG.2B

EP 2 270 939 A2

## Description

## BACKGROUND

### 1. Field

The present invention relates to a gas insulated switching apparatus in which the construction of the gas tubing with respect to the interior of the sealed container is improved.

### 2. Description of the Related Art

Gas insulated switching apparatuses in which equipment such as a high-voltage conductor and its circuit breaker are arranged in a grounded sealed container made of metal and insulation between this high-voltage equipment and the sealed container is effected by insulating with for example $SF_6$ gas are previously known. In such gas insulated switching apparatuses, gas tubing is provided in order to introduce/discharge insulating gas with respect to the sealed container. Such gas tubing is used to connect adjacent sealed containers in which gas is partitioned as shown in FIG. 1 of laid-open Japanese Patent Application Number Tokkai 2004-40963 (hereinbelow referred to as Patent Reference 1) or to connect the sealed containers with a gas supply device, as shown in FIG. 2. Also, laid-open Japanese Patent Application Tokkai 2000-134734 (hereinbelow referred to as Patent Reference 2) shows a similar technique regarding the gas tubing: in particular, insulating members are employed in order to prevent flow of sheath current on the gas tubing.

Conventionally, in the gas insulated switching apparatus provided with gas tubing as described in Patent References 1 and 2, typically copper tubing was employed as the gas tubing. Also, as shown in Patent Reference 2, in order to prevent flow of sheath current on the gas tubing, it was known to arrange insulating members such as insulating joints on the gas tubing. However, there were the drawbacks that labour and time were required for the task of installing the gas tubing and arranging the insulating members, and there was a high probability of gas leakage from such portions.

In particular, providing insulating members on the gas tubing resulted in an increase in the number of components and care had to be taken to ensure that excessive load was not applied to the insulating members; furthermore, waterproofing measures had to be taken in regard to portions of the insulating members that were exposed to the external atmosphere. Also, since the gas insulated switching apparatus consisted of an assembly of a plurality of items of equipment, although, in some cases, this was transported to the final destination in disassembled form, to be assembled and adjusted on installation on-site, in this case, in tubing installation, it was necessary to perform soldering or bending work of the copper tubing and on-site adjustment in accordance with the conditions of installation and great care had to be taken that faults were not created.

In addition, with the conventional copper tubing, since, even when applied to straight-line sections of the tubing, bending of the copper tubes themselves is difficult, special jigs or tools are required when the tubing is employed in bent portions of the tubing configuration and the installation work at the tubing installation site was difficult. In this connection, consideration has been given to employing a bendable copper bellows (flexible bellows-shaped tube), but, since the gas tubing is exposed to wind and rain over a long period, a rust preventive coating must be applied after bending of the tube and this represents a troublesome task.

## SUMMARY

The present invention was proposed in order to solve the above problems of the prior art described above, its object being to provide a gas insulated switching apparatus wherein flow of sheath current on the tubing can be prevented and installation of the gas tubing can be facilitated without employing insulating members.

In order to achieve the object described above, the present invention is constructed as follows. Specifically:

A gas insulated switching apparatus in which an insulating gas is sealed into a sealed container, in which an electrical conductor or electrically connected equipment is accommodated in the sealed container
is **characterized in that** a flexible tube made of a non-magnetic austenitic stainless steel metal bellows is employed as the gas tubing connected with the aforementioned sealed container. Also, according to an embodiment of the present invention, a flange is provided at the end of the flexible tube, this flange is constituted so as to be detachable with respect to the aforementioned metal bellows portion, and a coating employing a high-flexibility curing agent is applied or electro-deposited onto the metal bellows section of the aforementioned flexible tube.

With the present invention, by making the tube section of the gas tubing a flexible tube constituted by a stainless steel metal bellows, high resistance is achieved and inflow of sheath current is suppressed, thereby making insulating members unnecessary. Also, by employing a flexible tube with a high degree of freedom, the on-site brazing operation, which was formerly necessary, depending on the results of assembly and adjustment of the equipment, becomes is no longer necessary, and the gas tubing can be installed solely using bending operations.

## BRIEF DESCRIPTION OF THE DRAWINGS

FIG. 1 is a perspective view showing the construction of a first embodiment of the present invention;
FIG. 2A and FIG. 2B are cross-sectional views showing an example of a flexible tube according to a first embodiment; and
FIG. 3A, FIG. 3B, FIG. 3C and FIG. 3D are views showing examples of gas tubing installation according to a second embodiment, FIG. 3A being a front view (elevational view), FIG. 3B being a side view, FIG. 3C being a plan view and FIG. 3D being a detail view to a larger scale of a gas gauge section.

## DETAILED DESCRIPTION OF THE PREFERRED EMBODIMENTS

[First embodiment]

[Construction of the first embodiment]

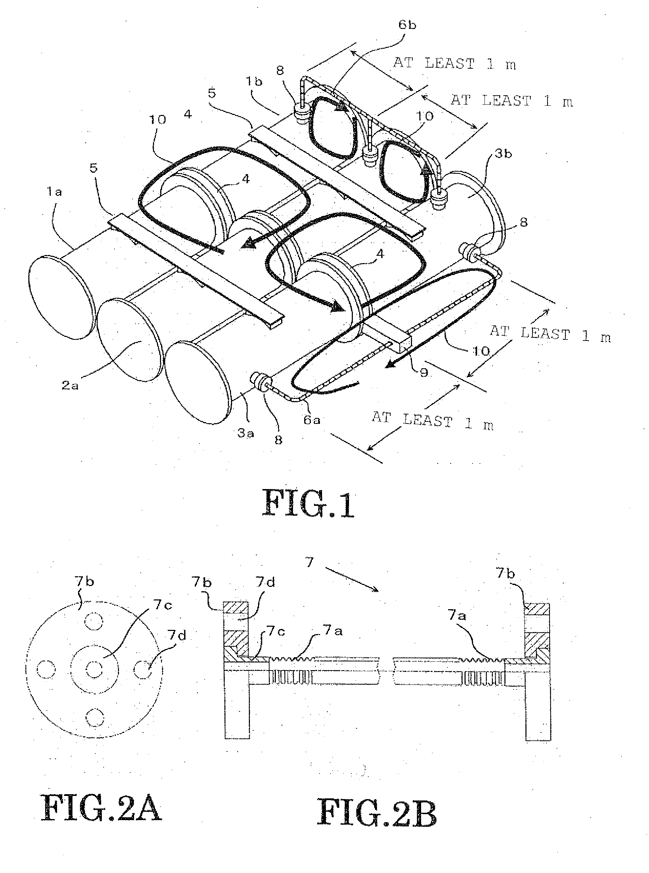

A specific description of the first embodiment of the present invention is given below with reference to FIG. 1 and FIG. 2A and FIG. 2B. FIG. 1 is a perspective view showing an example of the position of the gas tubing arranged between adjacent sealed containers. In the Figures, reference symbols 1a, 1b, 2a, 2b, 3a and 3b are sealed containers corresponding to the three phases, respectively accommodating electrical conductors or electrically connected equipment in their interior. Insulating gas such as $SF_6$ gas is sealed within the sealed containers 1a, 1b, 2a, 2b, 3a and 3b. The sealed containers 1a and 1b, 2a and 2b and 3a and 3b of each phase are connected through flanges 4. The gas bodies within the sealed containers of each phase are isolated from each other (i.e. "gas-partitioned") by the gas partition provided by the flanges 4 at the boundary between these containers, so that direct movement of gas between the adjacent sealed containers of the same phase cannot take place.

Electrically conductive members 5, 5 extending in the direction orthogonal to the axial direction of the sealed containers are fixed at the periphery of the sealed containers so as to connect the sealed containers 1a and 2a and 3a or 1b and 2b and 3b of each phase. These conductive members 5, 5 are called "inter-phase shunts", since they effect electrical connection between the sealed containers of each phase.

Gas tubing sections 6a, 6b are provided between adjacent sealed containers. Of these, the gas tubing section 6a effects connection between the adjacent sealed containers 1a, 1b of the same phase and the gas tubing section 6b effects connection between the adjacent sealed containers 1b, 2b, 3b of different phases. Although not shown, gas tubing sections also exist providing connection between the adjacent sealed containers 2a, 2b and between the adjacent sealed containers 3a, 3b of the same phase. In this way, gas tubing sections are connected in respect of all of the sealed containers, making it possible to supply and discharge gas in respect of these.

In this embodiment, the gas tubing sections 6a, 6b that connect the sealed containers are constituted by flexible tubes 7 having the construction shown in FIG. 2A and FIG. 2B. Specifically, this flexible tube 7 has connecting flanges 7b freely rotatably mounted at both ends of an austenitic stainless steel metal bellows 7a whose outer surface is coated with a high-flexibility coating. The gas tubing sections 6a, 6b are constituted of flexible tubes 7 connected with the sealed containers by hermetically fixing, with the aid of gas-tight gaskets, not shown, these connecting flanges 7b with respect to gas ports 8 for gas tubing connection provided at the side of the sealed containers.

For fixing these connecting flanges 7b at both ends of the metal bellows 7a, there may be employed means such as for example inserting the metal bellows 7a beforehand into insertion holes provided in the center of the connecting flanges 7b, fixing by means of welding, press-fitting or screwing in sleeves 7c at both ends of the metal bellows 7a, or spreading the ends of the metal bellows 7a by pressing. However, there is no restriction to such means. 7d are bolt-holes for connecting the gas ports provided on the flanges 7b.

For the high-flexibility coating, apart from coating as described above, coating may be applied to the outer surface of the flexible tube 7 by electro-deposition. Also, as the high-flexibility coating, there may be employed a single liquid reaction curing-type aqueous urethane coating having flexibility after curing, or a single liquid type especial denaturing polyester resin, or 2-liquid reaction type urethane coating employing a flexible curing agent.

The support interval of the aforementioned gas tubing sections 6a, 6b is set to at least 1 m. Specifically, when support is effected directly by the sealed containers, as in the case of the gas tubing section 6b of FIG. 1, the interval between the gas ports 8 of the sealed containers is set to at least 1 m; or, when support of part of the tube is effected by separately provided support members 9, as in the case of the gas tubing section 6a of FIG. 1, the interval between the gas ports 8 and the support members or the interval between the support members 9 is likewise set to at least 1 m.

[Action of the first embodiment]

(1) Reduction of the sheath current

As shown by the thick line (bold line) in FIG. 1, the sheath current 10 flows in the form of a loop on the current path formed by the sealed containers 1a to 3b of each phase and the conductive members 5, 5 constituting inter-phase shunts. When, as in the case of the first embodiment, the gas tubing sections 6a, 6b and the sealed containers 1a to 3b are arranged next to each other, the amount of the sheath current 10 that flows is determined by the ratio of the respective resistances and inductances. If the loop length of the sealed containers 2a to 3b is larger, there is a possibility that sheath current 10 may also flow into the loop of the gas tubing sections 6a, 6b. According to the present embodiment, since stainless steel metal bellows are employed for the gas tubing, the resistance is higher than in the case of copper tubing, so the sheath current 10 that is induced from the main circuit becomes small and there is thus no possibility of generation of heat due to flow of a large current, as in the case where the connection was effected using copper tubing.
A more specific description of this point will be given, taking the example of a copper tube and a stainless steel bellows as shown in (A) and (B) below.

>    (A) copper tube of external diameter 2 cm, thickness 1 mm;
>    (B) stainless steel bellows of external diameter 2 cm, thickness 0.3 mm

The peculiar resistivity of copper is 1.78 $\mu\Omega$cm at normal temperature and the peculiar resistivity of stainless steel is about 72 $\mu\Omega$cm at normal temperature. Since the resistance (resistance value) is inversely proportional to the area, the ratio of the resistances RA, RB of (A) and (B) is
RB/RA = 72/1.78 * 0.60/0.19 $\approx$ 128 i.e. the one is two orders of magnitude larger than the other.
If the resistance value of the tubing is double-digit orders of magnitude larger, the sheath current that is apportioned to the tubing sections is also decreased by double-digit orders of magnitude compared with the inter-phase shunt, so, if the main circuit current is 2000 A, the current flowing in the tubing is about 20 A. Furthermore, if the permitted temperature rise of the tubing is assumed to be 30 K, the amount of heat Q lost in no-wind conditions by a stainless steel round-section conductor of external diameter of about 2 cm arranged horizontally in the atmosphere at 20°C may be roughly calculated as follows. (In fact, since the tube is of flexible bellows shape, the heat-emission area is larger than in the case of a simple circular-section tube, so the heat lost is larger than that given below.)

[Math 1]

$$\text{Amount of heat lost } Q = \text{amount of heat radiated} + \text{amount of heat lost by natural convection}$$

$$= \text{tubing circumference} \times \text{tubing length} \times (5.677 \, \varepsilon \, ((T_1/100)^4 - (T_2/100)^4)$$

$$+ 2.51 \times \text{shape coefficient} \times (1/\text{representative length})^{0.25}$$

$$\times \text{temperature difference}^{1.25}) = 11.2 + 15.3 = 26.5 \, [W]$$

Tubing circumference: $0.02 \times \pi = 0.063$ [m], tubing length 1 [m] $\varepsilon$ radiation factor: 0.9 (coating surface), $T_1$ tubing temperature: 323K (50°C), $T_2$ ambient temperature: 293K (20°C), shape coefficient: 0.52 (horizontal cylindrical tube), representative length: 0.02 [m] (diameter)
Also, employing the resistance temperature coefficient 0.0057 of stainless steel, the resistance R of the aforementioned tubing is as follows.

[Math 2]

Resistivity/cross-sectional area × (1+ temperature

coefficient × difference with respect to 20°C) × tubing length

= 72 × $10^{-8}$/0.186 × $10^{-4}$ × (1+0.057 × (50 −20)) × 1 = 0 .045 Ω

Taking the allowed current value as I, if the amount of heat generated and the amount of heat lost are equal, Q = $I^2$R, so, substituting the above calculated value and calculating, I = √ (Q/R) = √ (26.5/0.045) = 24 A. This value is approximately equal to the sheath current value, so it is unnecessary to provide insulation for the tubing.

(2) The interval of the supports is at least 1 m

Regarding the thickness of the gas tubing sections 6a, 6b, 36, considering ease of the operation of supplying and discharging ordinary gases and ease of performing the bending operation, typically a thickness should be selected such that the external diameter size is from about 1 cm to 2 cm. The first-order natural vibration frequency (the first-order characteristic vibration frequency) of a straight rod-shaped tube of uniform cross-section may generally be calculated by the following expression.

[Math 3]

$$f = \frac{\lambda^2}{2\pi l^2} \sqrt{\frac{EIg}{\gamma A}} \quad (Hz)$$

where
l = length of the tube (cm)
E = Young's modulus of the tube material (kg/$cm^2$)
I = second-order moment of the cross-section with respect to main axis at right angles to the direction of vibration ($cm^4$)
A = cross-sectional area of the tube ($cm^2$) γ = weight of unit volume (kg/$cm^3$)
g = 981 cm/$s^2$
λ = coefficient of vibration (in the case of first order, 4.73: λ is the root of 1-cosh λ·cos λ = 0)
If we provisionally assume that the tube (A) is a copper tube of external diameter 2 cm, 1 mm thickness, by the above calculation, as shown in Table 1 below, for the characteristic vibration frequency a value of about 84 Hz is obtained. In contrast, if we assume that the stainless steel bellows (B) is of diameter 2 cm and thickness 0.3 mm, a value of about 121 Hz is obtained, as shown in Table 2 below. Typically, the frequency of mains AC power is 50/60 Hz, so, in order to avoid resonance, it is desirable that the doubled frequency should be below 120 Hz.

[Table 1]

| (A) Copper tube | | |
|---|---|---|
| 1: tube length | 100 | cm |
| E: Longitudinal elastic coefficient (Young's modulus) | 1,100,000 | kgf/cm2 |
| D: external diameter | 2.00 | cm |
| d: internal diameter | 1.80 | cm |

(continued)

| (A) Copper tube | | |
|---|---|---|
| 1: tube length | 100 | cm |
| I: second-order moment of cross-section | 0.27 | cm4 |
| A: area | 0.60 | cm2 |
| γ: specific gravity | 0.01 | cm3 |
| g: acceleration due to gravity | 981 | cm3/s2 |
| λ: vibration frequency coefficient | 4.73 | - |
| f: frequency | 83.40 | Hz |

[Table 2]

| (b) Stainless steel flexible tube | | |
|---|---|---|
| Tube length | 100 | cm |
| Longitudinal elastic coefficient (Young's modulus) | 1,960,000 | kgf/cm2 |
| External diameter | 2.00 | cm |
| Internal diameter | 1.94 | cm |
| Second-order moment of cross-section | 0.09 | cm4 |
| Area | 0.19 | cm2 |
| Specific gravity | 0.01 | cm3 |
| Acceleration due to gravity | 981 | cm3/s2 |
| Vibration frequency coefficient | 4.73 | |
| Frequency | 121.75 | Hz |

Consequently, in order to keep the characteristic vibration frequency below 120 Hz, it is necessary to make the support interval larger than 1 m. Specifically, in the above calculation example, if this interval is made at least 101 cm, a value of less than 120 Hz is obtained. It should be noted that, although in the above example, a tube diameter of 2 cm was assumed in the calculation, if the diameter is larger than this, the characteristic vibration frequency becomes correspondingly larger, so resonance can be avoided if support is effected at intervals of at least more than 1 m.

(3) Flexibility

In this embodiment, thanks to the use of stainless steel flexible tubes 7, installation can be effected by freely bending the tubes in accordance with the desired tubing arrangement, making use of the flexibility of the bellows. In particular, although stainless steel, which is of good corrosion resistance, is employed as the material of the metal bellows, in addition, In this embodiment, a coating of high-flexibility is applied to the surface of the flexible tubing 7, to prevent direct contact with the external atmosphere, so excellent weatherability is achieved with no risk of stress corrosion cracking in corrosive environments such as regions in the vicinity of the seashore.

[Second embodiment]

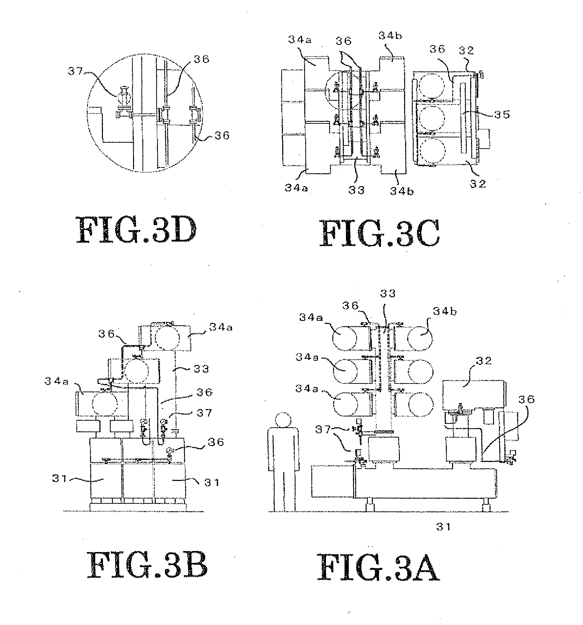

A second embodiment of the present invention is described with reference to FIG. 3A, FIG. 3B, FIG. 3C and FIG. 3D. In the gas insulated switching apparatus 30 of this second embodiment, two main buses are connected with a bus for a single power supply circuit through a circuit breaker 31. Specifically, the gas insulated switching apparatus 30 comprises circuit breakers 31 corresponding to the three phases, a bus 32 for the power supply circuit connected with one terminal of the circuit breaker 31 of each phase, a T type connection bus 33 connected vertically with the other end of the circuit breaker 31, a first main-bus disconnector (disconnecting switching) 34a provided at one terminal at the top of the T type connection bus 33, and a second main-bus disconnector (disconnecting switching) 34b provided at the other terminal at the top of the T type connection bus 33. These items of equipment constituting the gas insulated switching apparatus 30, like the first embodiment described above, are constituted of a sealed container and high-voltage equipment arranged therein, insulation being guaranteed by insulating gas sealed within the sealed containers.

In the second embodiment, the items of equipment of the three phases are connected by means of conductive members 35 constituted by inter-phase shunts, as shown in plan view in FIG. 3C. Also, in order to achieve introduction (charging) and discharge of the insulating gas in respect of the constituent items of equipment, gas tubing 36 is provided connected with gas ports 8 provided in each sealed container. A gas gauge 37 for pressure monitoring is provided in a part of this gas tubing 36. This gas gauge 37 must be visually checked during maintenance or operation of the gas insulated switching apparatus 30 and so is provided in a position adjacent to the person performing maintenance or operation.

As the tubing for mounting of the aforementioned gas tubing 36 and gas gauge 37, just as in the case of the first embodiment described above, a flexible tube is employed that is provided with connecting flanges at both ends of an austenitic stainless steel metal bellows coated with a high-flexibility coating. Also, the long section of the tubing is supported on the sealed container by support members 38, but, in this case, the fact that this tubing section is supported on the equipment main body at intervals of at least 1 m is the same as in the case of the first embodiment.

With the second embodiment also, constructed in this way, just as in the case of the first embodiment described above, since a stainless steel flexible tube is employed as the gas tubing 36, flow of sheath current in the form of a loop in the gas tubing can be prevented. Also, by supporting the tubing sections at intervals of at least 1 m, vibration caused by resonance with the frequency of the mains power system can be prevented. In addition, by coating the outside of the flexible tube with a high-flexibility coating, the operation of coating after bending the tubing becomes unnecessary and weatherability of the tubing can be improved.

[Other embodiments]

The present invention is not restricted to the embodiments described above and includes the following other embodiments.

(1) Damage due to external impacts can be prevented by protecting the flexible tube 7 with metal fiber braid.
(2) By arranging copper or brass linear tubing and stainless steel flexible tubes 7 adjacent to each other, and by performing installation with sections of simple shape such as long linear sections of the tubing path using straight tube- shaped tubing and incorporating stainless steel flexible tubes 7, which offer a high degree of freedom in respect of installation work and are of high resistance, at various points in the tubing, ease of installation can be improved and insulating members can be dispensed with without needing to construct all of the tubing using flexible tubes 7. In this case, the region peripheral to the connection of the gas gauge 37 is designated as a region where metering equipment is concentrated, so the installation work is facilitated by employing tubing of high-flexibility.

**Claims**

1. A gas insulated switching apparatus in which an insulating gas is sealed into a sealed container, in which an electrical conductor or electrically connected equipment is accommodated in said sealed container, wherein connection between said sealed containers or between said sealed container and a gas gauge is effected by a flexible tube made of a non-magnetic austenitic stainless steel metal bellows.

2. The gas insulated switching apparatus according to claim 1, further comprising a flange provided at an end of said flexible tube, wherein said flange is constituted so as to be detachable with respect to said metal bellows portion, and said flexible tube is connected with said sealed container through said flange.

3. The gas insulated switching apparatus according to claim 1 or claim 2, wherein an interval of support members of said flexible tube is at least 1 m.

4. The gas insulated switching apparatus according to any of claim 1 to claim 3, wherein a high-flexibility coating is applied by coating or electro-deposition onto said metal bellows of said flexible tube.

FIG.1

FIG.2A     FIG.2B

FIG.3D

FIG.3C

FIG.3B

FIG.3A

**EP 2 270 939 A2**

**Patent documents cited in the description**

- JP 2004040963 A
- JP 2000134734 A